# DEMANDE DE BREVET EUROPEEN

(11) **EP 1 093 832 A1**
(43) Date de publication de la demande: **25.04.2001**
(21) Numéro de dépôt: 00402883.3
(22) Date de dépôt: 18.10.2000
(51) Int. Cl.: A63F 13/02, G06K 19/06

(54) **Carte mémoire pour la sauvegarde de jeux vidéo**

(30) Priorité: 21.10.1999 FR 9913134
(71) Demandeur: Bigben Interactive, 59810 Lesquin (FR)
(72) Inventeur: Falc, Alain Francis, 59420 Mouvaux (FR)
(74) Mandataire: Hauer, Bernard

(57) **Abrégé**

- La présente invention concerne une carte mémoire pour la sauvegarde de jeux vidéo, ladite carte mémoire (1) comportant une mémoire (3) de sauvegarde de jeux, un moyen de connexion (4) permettant de connecter ladite carte mémoire (1) à une console de jeux, et un dispositif (5) de gestion de la carte mémoire, qui est lié à ladite mémoire (3) de sauvegarde de jeux et audit moyen de connexion (4) et qui gère la sauvegarde de jeux.
- Selon l'invention, ladite carte mémoire (1) comporte de plus un enregistreur vocal (9) associé à un microphone (11) et à un haut-parleur (10), et ledit dispositif (5) de gestion de la carte mémoire est commandable et gère également les enregistrements effectués par ledit enregistreur vocal (9).

## Description

La présente invention concerne une carte mémoire pour la sauvegarde de jeux vidéo.

Une telle carte mémoire comporte généralement :
- une mémoire de sauvegarde de jeux ;
- un moyen de connexion permettant de connecter ladite carte mémoire à une console de jeux ; et
- un dispositif de gestion de la carte mémoire, qui est lié à ladite mémoire de sauvegarde de jeux et audit moyen de connexion et qui gère la sauvegarde de jeux.

On sait qu'il est généralement possible d'enregistrer plusieurs jeux vidéo sur une seule et même carte mémoire de ce type. De plus, des jeux déjà enregistrés peuvent être effacés et remplacés par d'autres jeux.

Dans ces conditions, il est nécessaire de prévoir des moyens permettant de connaître ou d'identifier facilement les jeux qui sont effectivement enregistrés sur la carte mémoire.

Pour ce faire, on colle généralement une étiquette sur le boîtier de la carte mémoire, sur laquelle on écrit le nom des jeux effectivement enregistrés.

Cette solution connue n'est guère pratique, car il est généralement nécessaire de remplacer l'étiquette lors de chaque nouvel enregistrement, ce qui présente des inconvénients. En effet, pour coller une étiquette sur la carte mémoire, on a généralement le choix entre :
- une étiquette autocollante fortement adhérente. Toutefois, le remplacement d'une telle étiquette est généralement difficile ; ou
- une étiquette autocollante faiblement adhérente. Il existe alors un risque de perte de l'étiquette.

De plus, en raison de la surface réduite de l'étiquette, les indications ou données notées sur cette dernière sont forcément limitées.

Cette solution connue n'est donc guère satisfaisante.

La présente invention a pour objet de remédier à ces inconvénients. Elle concerne une carte mémoire du type précité, pour laquelle au moins l'identification des jeux vidéo sauvegardés est réalisée de façon simple et fiable.

A cet effet, la carte mémoire pour la sauvegarde de jeux vidéo, ladite carte mémoire comportant :
- une mémoire de sauvegarde de jeux ;
- un moyen de connexion permettant de connecter ladite carte mémoire à une console de jeux ; et
- un dispositif de gestion de la carte mémoire, qui est lié à ladite mémoire de sauvegarde de jeux et audit moyen de connexion et qui gère la sauvegarde de jeux,
est remarquable en ce qu'elle comporte de plus un enregistreur vocal associé à un microphone et à un haut-parleur, et en ce que ledit dispositif de gestion de la carte mémoire est commandable et gère également les enregistrements effectués par ledit enregistreur vocal.

Ainsi, grâce à l'invention, on peut enregistrer vocalement sur ledit enregistreur vocal des données concernant les jeux vidéo sauvegardés, notamment le nom desdits jeux, les données ainsi enregistrées pouvant être restituées vocalement par une simple lecture de l'enregistrement de sorte que l'identification des différents jeux vidéo sauvegardés est réalisée de façon très simple.

De plus, cette identification est très fiable, puisqu'il n'existe aucun risque de perdre des informations, à la différence de ce qui peut se passer avec les étiquettes autocollantes précitées.

En outre, on peut enregistrer vocalement une quantité importante de données, à la différence desdites étiquettes autocollantes usuelles, dont la taille réduite restreint obligatoirement la quantité de données affichées.

L'enregistreur vocal conforme à l'invention présente en effet une mémoire relativement importante et il peut donc enregistrer d'autres messages que la simple identification des différents jeux, en particulier des données concernant le mode d'emploi des jeux et/ou le nom de la personne ayant procédé à l'enregistrement.

On notera que le dispositif de gestion de la carte mémoire gère simultanément :
- la sauvegarde des jeux vidéo ; et
- l'enregistrement vocal de données relatives auxdits jeux vidéo sauvegardés.

Par ailleurs, ladite carte mémoire comporte, de plus, avantageusement :
- une touche d'enregistrement actionnable, destinée à commander ledit dispositif de gestion de la carte mémoire, en vue de l'enregistrement d'un message par ledit enregistreur vocal ;
- une touche de lecture actionnable, destinée à commander ledit dispositif de gestion de la carte mémoire, en vue de la lecture d'un message enregistré par ledit enregistreur vocal ; et/ou
- une diode électroluminescente qui est formée de manière à émettre un rayonnement lumineux lors de l'enregistrement d'un message par ledit enregistreur vocal.

Les figures du dessin annexé feront bien comprendre comment l'invention peut être réalisée. Sur ces figures, des références identiques désignent des éléments semblables.

La figure 1 est un schéma synoptique d'une carte mémoire conforme à l'invention.

Les figures 2 à 4 sont respectivement des vues de face, latérale et de dessous d'un mode de réalisation particulier d'une carte mémoire conforme à l'invention.

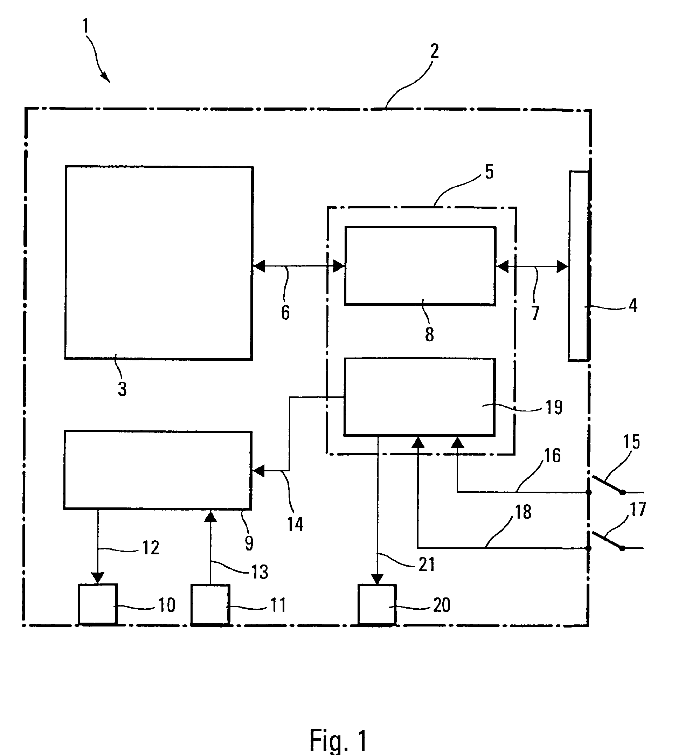

La carte mémoire 1 conforme à l'invention et représentée schématiquement sur la figure 1 est destinée à sauvegarder des jeux vidéo.

A cet effet, ladite carte mémoire 1 comporte, de façon connue :
- un boîtier 2 ;
- une mémoire 3 de sauvegarde de jeux, de type usuel ;
- un moyen de connexion 4 permettant de connecter ladite carte mémoire 1 à une console de jeux vidéo, non représentée, dont on veut enregistrer un jeu ; et
- un dispositif 5 de gestion de la carte mémoire, qui est relié par l'intermédiaire de liaisons 6 et 7 respectivement à la mémoire 3 et au moyen de connexion 4 et qui gère la sauvegarde des jeux. Ledit dispositif 5 de gestion de la carte mémoire comporte à cet effet une puce 8 de gestion de la mémoire 3.

Pour permettre une identification facile et fiable de données relatives à des jeux vidéo sauvegardés, ladite carte mémoire 1 comporte de plus, selon l'invention :
- un enregistreur vocal 9 de type usuel, qui est relié à un haut-parleur 10 et à un microphone 11, respectivement par l'intermédiaire de liaisons 12 et 13 et qui est commandé par ledit dispositif 5 de gestion de la carte mémoire, comme illustré par une liaison 14. Ce dernier utilise à cet effet une puce 19 de gestion de l'enregistrement ;
- une touche d'enregistrement 15 reliée par une liaison 16 audit dispositif 5 ; et
- une touche de lecture 17 reliée par une liaison 18 audit dispositif 5.

Lesdites touches d'enregistrement 15 et de lecture 17 commandent ledit dispositif 5, en vue respectivement de l'enregistrement et de la lecture d'un message.

Ainsi, grâce à l'invention, on peut enregistrer sur ledit enregistreur vocal 9 des données relatives aux jeux vidéo sauvegardés. Un tel enregistrement :
- est très facile à mettre en oeuvre. Il suffit en effet d'appuyer sur la touche d'enregistrement 15 et de parler ;
- peut être restitué facilement, en appuyant sur la touche de lecture 17 ;
- est très fiable. Il n'existe en effet aucun risque de perte de données ; et
- peut concerner une quantité importante de données, qui sont directement ou indirectement liées aux jeux vidéo sauvegardés.

Bien entendu, les données enregistrées par l'enregistreur vocal 9 peuvent également n'avoir aucun lien avec les jeux vidéo sauvegardés.

On notera que des informations enregistrées peuvent être effacées et remplacées par d'autres informations, en enregistrant simplement les nouvelles informations sur des informations déjà enregistrées.

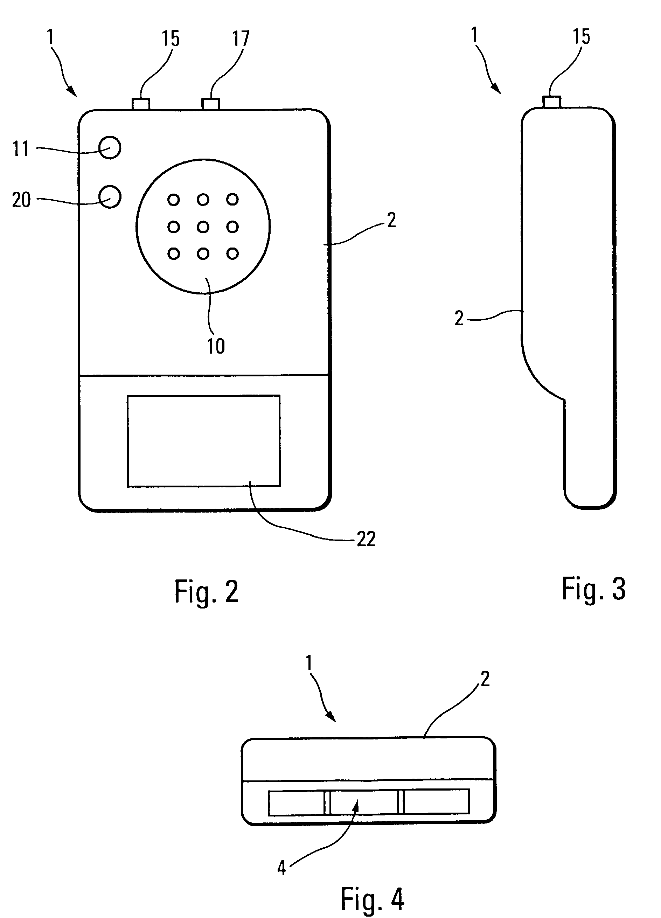

Selon l'invention, la carte mémoire 1 comporte de plus :
- une diode électroluminescente 20 qui est reliée par une liaison 21 au dispositif 5 et qui est formée de manière à émettre un rayonnement lumineux lors de l'enregistrement d'un message par ledit enregistreur vocal 9 ; et
- une étiquette autocollante 22, qui est prévue sur la face avant du boîtier 2, comme illustré sur la figure 2.

Cette étiquette autocollante 22 permet d'afficher des informations supplémentaires et/ou complémentaires, relatives notamment aux jeux sauvegardés ou à la carte mémoire 1.

En particulier, on peut noter sur cette étiquette autocollante 22 un nom ou un code permettant d'identifier la carte mémoire 1, notamment pour faciliter son rangement.

Les figures 2 à 4 montrent respectivement en vue de face, en vue latérale et en vue de dessous un mode de réalisation préféré de l'invention.

## Revendications

1. Carte mémoire pour la sauvegarde de jeux vidéo, ladite carte mémoire (1) comportant :
- une mémoire (3) de sauvegarde de jeux ;
- un moyen de connexion (4) permettant de connecter ladite carte mémoire (1 ) à une console de jeux ; et
- un dispositif (5) de gestion de la carte mémoire, qui est lié à ladite mémoire (3) de sauvegarde de jeux et audit moyen de connexion (4) et qui gère la sauvegarde de jeux,
caractérisée en ce qu'elle comporte de plus un enregistreur vocal (9) associé à un microphone (11) et à un haut-parleur (10), et en ce que ledit dispositif (5) de gestion de la carte mémoire est commandable et gère également les enregistrements effectués par ledit enregistreur vocal (9).

2. Carte mémoire selon la revendication 1,
caractérisée en ce qu'elle comporte une touche d'enregistrement (15) actionnable, destinée à commander ledit dispositif (5) de gestion de la carte mémoire, en vue de l'enregistrement d'un message par ledit enregistreur vocal (9).

3. Carte mémoire selon l'une des revendications 1 et 2,
caractérisée en ce qu'elle comporte une touche de lecture (17) actionnable, destinée à commander ledit dispositif (5) de gestion de la carte mémoire, en vue de la lecture d'un message enregistré par ledit enregistreur vocal (9).

4. Carte mémoire selon l'une des revendications 1 à 3,
caractérisée en ce qu'elle comporte de plus une diode électroluminescente (20) qui est formée de manière à émettre un rayonnement lumineux lors de l'enregistrement d'un message par ledit enregistreur vocal (9).
